# EUROPEAN PATENT SPECIFICATION

(11) **EP 0 666 633 B1**
(45) Date of publication and mention of the grant of the patent: **15.07.1998**
(21) Application number: 94300824.3
(22) Date of filing: 04.02.1994
(51) Int. Cl.: H02J 7/34, F03D 9/02

(54) **An electric energy generation and storage apparatus**
System zur Generation und Speicherung elektrischer Energie
Un système de generation et stockage d'énergie électrique

(43) Date of publication of application: 09.08.1995
(73) Proprietor: Yang, Tai-Her, Si-Hu Town, Dzan-Hwa (TW)
(72) Inventor: Yang, Tai-Her, Si-Hu Town, Dzan-Hwa (TW)
(74) Representative: Arthur, Bryan Edward

(56) References cited:
- EP-A- 0 347 310
- DE-A- 3 640 121
- DE-A- 3 939 522
- GB-A- 2 190 554
- US-A- 4 464 579
- ELEKTOR ELECTRONICS, vol.19, no.212, June 1993, CANTERBURY, GB, pages 14 - 16; NIGIM: 'Electricity from the wind'

## Description

### SUMMARY OF THE INVENTION:

The present invention is an electric energy generation and storage apparatus which comprises a propeller constituting a revolving power source for gathering energy from a moving fluid, the propeller having a brake and a speed of rotation detector, an a.c. generator driveable by the propeller to generate a.c. electricity for supply to a power network, a storage battery, a central control unit for controlling operation of the apparatus, a d.c. generator/motor having generator and motor functions controlled by the central control unit; and a planetary gear system connecting the propeller, the a.c. generator and the d.c. generator/motor, wherein the apparatus is operable in the following modes:
a) when the speed of the propeller is less than that necessary to generate a desired output from the a.c. generator, the brake is engaged to stop the propeller, and the a.c. generator is driven by the d.c. generator/motor via the planetary gear system, the d.c. generator/motor being powered by the storage battery;
b) when the speed of the propeller is less than that necessary to generate a desired output of the a.c. generator, the d.c. generator/motor is operated to drive the a.c. generator together with the propeller through the planetary gear system so that the a.c. generator is sufficiently powered, the d.c. generator/motor being powered by the storage battery; and
c) when the speed of the propeller is greater than that necessary to generate the desired output of the a.c. generator, the d.c. generator/motor is driveable by surplus rotational energy of the propeller to charge the storage battery in addition to the driving of the a.c. generator to produce the desired a.c. output.

In the prior art, it is known from US-A-4464579 to use a wind turbine coupled to an a.c. generator to supply power to the a.c. grid. It is also known from DE-A-3640121 to use batteries to supply a wind generation system during low wind conditions.

### BRIEF DESCRIPTION OF THE DRAWINGS:

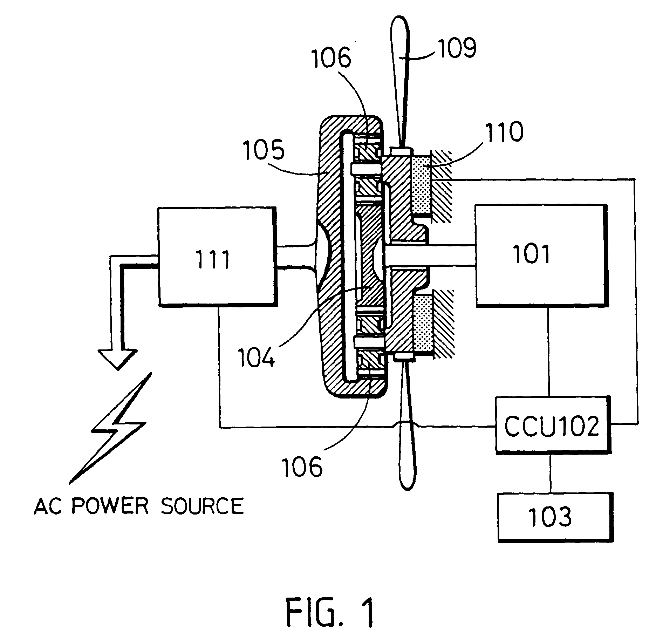

Figure 1 is a schematic view of the structure of the electric energy generation and storage apparatus of differential distribution type.

### DETAILED DESCRIPTION OF THE INVENTION:

Traditional rotary machines change an unstable energy source into electric power. Small and medium power sources of this kind are wind, tide, wave, sea current, rivers, and streams. Wind and water current are unstable and intermittent energy sources, the suddenly expanding peak or trough value of its mechanical energy being difficult to accumulate by existing generating devices. A main object of the electric energy generation and storage apparatus of the present invention is to overcome the defects of the traditional apparatus. The apparatus comprises a propeller constituting a revolving power source for gathering energy from a moving fluid, the propeller having a brake and a speed of rotation detector, an a.c. generator driveable by the propeller to generate a.c. electricity for supply to a power network, a storage battery, a central control unit for controlling operation of the apparatus, a d.c. generator/motor having generator and motor functions controlled by the central control unit; and a planetary gear system connecting the propeller, the a.c. generator and the d.c. generator/motor, wherein the apparatus is operable in the following modes:
a) when the speed of the propeller is less than that necessary to generate a desired output from the a.c. generator, the brake is engaged to stop the propeller, and the a.c. generator is driven by the d.c. generator/motor via the planetary gear system, the d.c. generator/motor being powered by the storage battery;
b) when the speed of the propeller is less than that necessary to generate a desired output of the a.c. generator, the d.c. generator/motor is operated to drive the a.c. generator together with the propeller through the planetary gear system so that the a.c. generator is sufficiently powered, the d.c. generator/motor being powered by the storage battery; and
c) when the speed of the propeller is greater than that necessary to generate the desired output of the a.c. generator, the d.c. generator/motor is driveable by surplus rotational energy of the propeller to charge the storage battery in addition to the driving of the a.c. generator to produce the desired a.c. output.

In addition to driving the d.c. generator/motor and the a.c. generator simultaneously, the angle of the propeller can also be changed in a traditional way, or a damper can be included which is operated by fluid force, mechanical force, or magnetic current so as to inhibit the overflow or surplus driving of the propeller.

Figure 1 shows a schematic view of the structure of the electric energy generation and storage apparatus. The structure comprises:

A propeller 109 which is used for generating rotary mechanical energy from wind power or fluid power. It drives a differential or planetary gear system (see below). In this embodiment, the propeller 109 has a pitch-changing control device controlled by a central control unit CCU102. A rotary speed detecting device may be included, and also a rotary surplus speed damper could be included. Such a damper would typically operate by fluid force, mechanical force, or magnetic current effect.

A d.c. generator/motor (dynamo) 101 which is a traditional constant magnetic or coiled exciting magnetic d.c. dynamo, which can be operated as a d.c. generator or a d.c. motor by means of its control by the central control unit CCU102. When it is used as a generator, it can receive rotary mechanical energy from the differential or planetary gear system driven by the propeller 109 to produce d.c. energy to charge a battery 103. When it is used as a motor, it can receive electrical power from the storage battery 103 so as to be driven under the control of the central control unit CCU102 thereby driving an a.c. generator 111 through the differential gear system.

The differential gear set consists of a set of planetary gears, including an output/input shaft sun gear 104, an outer ring output/input gear 105, and the circulating planet gears 106. The two output/input shafts and the circulating planet gears connect a rotary shaft coupled to the d.c. generator/motor 101, a rotary shaft coupled to the a.c. generator 111 and the propeller 109 together. A brake 110 is included for braking the propeller 110. A rotary over speed damper can also be included for reducing surplus energy.

The a.c. generator 111 can receive drive from the differential gear system to produce a.c. energy. Its voltage value and frequency are fed back simultaneously to unit CCU102 to receive the control. It is also used as a synchronous motor to generate drive from the mains a.c. electricity input.

The central control unit CCU102 consists of electromechanical or solid electronic elements for the control of the apparatus as follows:
(1) d.c. generator/motor 101 is operated as a generator to generate electricity from the rotation of the propeller 109 which is used for charging the battery 103;
(2) d.c. generator/motor 101 is used as a motor to drive the a.c. generator 111 either alone or together with the propeller 109 so that the a.c. generator 111 reaches its generating frequency and the load current, and the rotary speed of the propeller together with the a.c. generator 111 is are sufficient. The control unit CCU102 therefore controls the d.c. generator/motor speed;
(3) control of the exciting magnetism of the a.c. generator 111 for controlling its generating voltage and the load adjusting ratio;
(4) a brake on the control a.c. generator side and the d.c. generator/motor can transmit to each other solely through the propeller 109;
(5) it controls the adjustment of the propelling angle of the propeller 109, or it controls the damper of rotary over-speed energy;
(6) it controls the brake 110 of the propeller to stop the propeller so that a.c. power can be generated by the a.c. generator 111 which is driven by the d.c. generator/motor 101 operating as a motor. Alternatively the d.c. generator/motor is operated as a generator for charging the battery 103, the a.c. generator 111 being powered by a.c. electricity to drive the d.c. generator/motor 101.

By means of the above-mentioned unique invention, the weaker motive force, for example, of fluid flows such as wind power, wave power and tide power can be used so that the d.c. generator/motor 101 is rotatably driven by the energy of the storage battery 103 together with the power gathered by the propeller 109 to drive the a.c. generator 111. Thus, the power gathered by the propeller 109 which would often be too weak to be used alone, and the power gathered by the propeller 109 when it is stronger can be used more efficiently to drive the a.c. generator 111, and when the gathered energy is great enough, the d.c. generator/motor 101 also charges the battery 103. A differential gear set 104, 105, 106 is used to enable this operation. When the a.c. generator 111 is in the off-peak period, it drives the d.c. generator/motor to charge the storage battery 103. It is therefore a significant improvement on the traditional system which uses a propeller shaft coupled to a single dynamo.

## Claims

1. An electric energy generation and storage apparatus comprising:
a propeller (109) constituting a revolving power source for gathering energy from a moving fluid, the propeller (109) having a brake (110) and a speed of rotation detector,
an a.c. generator (111) driveable by the propeller (109) to generate a.c. electricity for supply to a power network,
a storage battery (103),
a central control unit (CCU102) for controlling operation of the apparatus,
a d.c. generator/motor (101) having generator and motor functions controlled by the central control unit (CCU102); and
a planetary gear system connecting the propeller (109), the a.c. generator (111) and the d.c. generator/motor (101);
wherein the apparatus is operable in the following modes:
a) when the speed of the propeller (109) is less than that necessary to generate a desired output from the a.c. generator (111), the brake (110) is engaged to stop the propeller (109), and the a.c. generator (111) is driven by the d.c. generator/motor (101) via the planetary gear system, the d.c. generator/motor (101) being powered by the storage battery (103);
b) when the speed of the propeller (109) is less than that necessary to generate a desired output of the a.c. generator (111), the d.c. generator/motor (101) is operated to drive the a.c. generator (111) together with the propeller (109) through the planetary gear system so that the a.c. generator (111) is sufficiently powered, the d.c. generator/motor (101) being powered by the storage battery (103); and
c) when the speed of the propeller (109) is greater than that necessary to generate the desired output of the a.c. generator (111), the d.c. generator/motor (101) is driveable by surplus rotational energy of the propeller (109) to charge the storage battery (103) in addition to the driving of the a.c. generator (111) to produce the desired a.c. output.

2. Apparatus according to claim 1, wherein the central control unit (CCU102) operates to control the speed of rotation of the d.c. generator/motor (101).

3. Apparatus according to claim 2, wherein the central control unit (CCU102) controls the speed of rotation of the d.c. generator/motor (101) so as to contribute sufficient rotational power to the a.c. generator (111).

4. Apparatus according to any one of claims 1 to 3, wherein the central control unit (CCU102) operates to control the exciting magnetism of the a.c. generator (111) in order to control its generating voltage.

5. Apparatus according to any one of the preceding claims, wherein the central control unit (CCU102) operates to control the brake (110).

6. Apparatus according to any one of the preceding claims, wherein the angle of each propeller blade is adjustable.

7. Apparatus according to claim 6, wherein the central control unit (CCU102) operates to control the angle of the propeller blades.

8. Apparatus according to any one of the preceding claims, further comprising a damper for reducing surplus rotational speed from the propeller (109).

9. Apparatus according to claim 8, wherein the central control unit (CCU102) operates to control the operation of the damper.

10. Apparatus according to any one of the preceding claims, operable such that mains electricity from the power network can be used to power the a.c. generator (111) as a motor to drive the d.c. generator/motor (101) for charging the battery (103).

11. Apparatus according to any one of the preceding claims, wherein the planetary gear system includes a sun gear (104) rotatable with the d.c. generator/motor (101), a ring gear (105) rotatable with the a.c. generator (111), and planetary gears (106) rotatable with the propeller (109) about the axis of the sun gear (104).

12. Apparatus according to any one of the preceding claims wherein the propeller (109) is adapted to be driven by wind.

13. Apparatus according to any one of claims 1 to 11, wherein the propeller (109) is adapted to be driven by water flow.

## Patentansprüche

1. Vorrichtung zur Erzeugung und Speicherung elektrischer Energie, die folgendes aufweist:
einen als Drehkraftquelle dienenden Propeller (109) zur Energieaufnahme aus einem strömenden Fluid, wobei der Propeller (109) eine Bremsvorrichtung (110) und einen Drehzahlsensor aufweist;
einen vom Propeller (109) antreibbaren Wechselstromgenerator (111) zur Erzeugung von Wechselstrom zur Einspeisung in ein Energieversorgungsnetz;
eine Speicherbatterie (103);
eine zentrale Steuerung (CCU102) zur Steuerung des Betriebs der Vorrichtung;
einen Gleichstromgenerator/-motor (101) mit von der zentralen Steuerung (CCU102) gesteuerter Generator- und Motorfunktion; sowie
ein Planetenradsystem zur Verbindung des Propellers (109), des Wechselstromgenerators (111) und des Gleichstromgenerators/-motors (101);
wobei die Vorrichtung in den folgenden Betriebsarten betrieben werden kann:
a) Bei einer für die Erzeugung einer gewünschten Leistung am Wechselstromgenerator (111) zu geringen Drehzahl des Propellers (109) wird die Bremsvorrichtung (110) zum Anhalten des Propellers (109) in Eingriff gebracht und der Wechselstromgenerator (111) wird über das Planetenradsystem vom Gleichstromgenerator/-motor (101) angetrieben, der wiederum von der Speicherbatterie (103) gespeist wird.
b) Bei einer für die Erzeugung einer gewünschten Leistung am Wechselstromgenerator (111) zu geringen Drehzahl des Propellers (109) wird der Gleichstromgenerator/-motor (101) über das Planetenradsystem gemeinsam mit dem Propeller (109) zum Antrieb des Wechselstromgenerators (111) zur Gewährleistung einer ausreichenden Versorgung des Wechselstromgenerators (111) eingesetzt. Der Gleichstromgenerator/-motor (101) wird von der Batterie (103) gespeist.
c) Ist die Drehzahl des Propellers (109) höher als zur Erzeugung der gewünschten Leistung am Wechselstromgenerator (111) erforderlich, kann der Gleichstromgenerator/-motor (101) von der überschüssigen Drehungsenergie des Propellers (109) angetrieben werden, so daß er sowohl den Wechselstromgenerator (111) zur Erzeugung der gewünschten Leistung antreibt als auch die Speicherbatterie (103) lädt.

2. Vorrichtung nach Anspruch 1, wobei die zentrale Steuerung (CCU102) die Drehzahl des Gleichstromgenerators/-motors (101) steuert.

3. Vorrichtung nach Anspruch 2, wobei die zentrale Steuerung (CCU102) die Drehzahl des Gleichstromgenerators/-motors (101) zur Bereitstellung einer insgesamt ausreichenden Drehkraft für den Wechselstromgenerator (111) steuert.

4. Vorrichtung nach einem der Ansprüche 1 bis 3, wobei die zentrale Steuerung (CCU102) die Erreger-Induktivität des Wechselstromgenerators (111) zur Steuerung seiner Generatorspannung steuert.

5. Vorrichtung nach irgendeinem der vorgenannten Ansprüche, wobei die zentrale Steuerung (CCU102) die Bremsvorrichtung (110) steuert.

6. Vorrichtung nach irgendeinem der vorgenannten Ansprüche, wobei der Anstellwinkel jedes Propellerblatts verstellbar ist.

7. Vorrichtung nach Anspruch 6, wobei die zentrale Steuerung (CCU102) den Anstellwinkel der Propellerblätter steuert.

8. Vorrichtung nach irgendeinem der vorgenannten Ansprüche, wobei diese zusätzlich einen Drehzahlbegrenzer zur Verringerung einer zu hohen Drehzahl des Propellers (109) aufweist.

9. Vorrichtung nach Anspruch 8, wobei die zentrale Steuerung (CCU102) den Betrieb des Drehzahlbegrenzers steuert.

10. Vorrichtung nach irgendeinem der vorgenannten Ansprüche, die so betrieben werden kann, daß der Wechselstromgenerator (111) mit Netzstrom aus dem Energieversorgungsnetz angetrieben wird und als ein Motor den Gleichstromgenerator/-motor (101) zum Laden der Batterie (103) antreibt.

11. Vorrichtung nach irgendeinem der vorgenannten Ansprüche, wobei das Planetenradsystem ein mit dem Gleichstromgenerator/motor (101) drehbares Sonnenrad (104), ein mit dem Wechselstromgenerator (111) drehbares Hohlrad (105) sowie mit dem Propeller (109) um die Achse des Sonnenrads (104) laufende Planetenräder (106) aufweist.

12. Vorrichtung nach irgendeinem der vorgenannten Ansprüche, wobei der Propeller (109) für den Antrieb durch Windkraft ausgelegt ist.

13. Vorrichtung nach einem der Ansprüche 1 bis 11, wobei der Propeller (109) für den Antrieb durch fließendes Wasser ausgelegt ist.

## Revendications

1. Un dispositif de génération et de stockage d'énergie électrique, comprenant:
- un hélice (109) constituant une source de puissance tournante pour rassembler l'énergie d'un fluide en écoulement, l'hélice (109) comportant un frein (110) et un capteur de vitesse de rotation;
- un générateur à courant alternatif (111) susceptible d'être entraîné par l'hélice (109) pour générer de l'électricité en courant alternatif pour alimenter un réseau de puissance;
- une batterie de stockage (103);
- une unité centrale de commande et de contrôle (CCU 102) pour contrôler le fonctionnement du dispositif;
- un générateur/moteur à courant continu (101) réalisant des fonctions de générateur et de moteur contrôlées par l'unité centrale de contrôle (CCU 102); et
- un système de trains d'engrenages planétaires ou épicycloïdaux reliant l'hélice (109), le générateur à courant alternatif (111) et le générateur/moteur à courant continu (101 );
dans lequel le dispositif est susceptible de fonctionner selon les modes suivants:
a) lorsque la vitesse de l'hélice (109) est inférieure à celle nécessaire pour générer une puissance de sortie souhaitée, à partir du générateur à courant alternatif (111), le frein (110) est appliqué pour arrêter l'hélice (109), et le générateur à courant alternatif (111) est entraîné par le générateur/moteur à courant continu (101) via le système à engrenages planétaires, le générateur/moteur à courant continu (101) étant alimenté en puissance par la batterie de stockage (103);
b) lorsque la vitesse de l'hélice (109) est inférieure à celle nécessaire pour générer une puissance de sortie souhaitée par le générateur à courant alternatif (111), le générateur/moteur à courant continu (101) est actionné pour entraîner le générateur à courant alternatif (111) en même temps que l'hélice (109), via le système de train d'engrenage planétaire, de telle façon que le générateur à courant alternatif (111) soit entraîné avec une puissance suffisante pour que le générateur/moteur à courant continu (101) soit alimenté par la batterie de stockage (103); et
c) lorsque la vitesse de l'hélice (109) est supérieure à celle nécessaire pour générer la puissance de sortie souhaitée du générateur à courant alternatif (111), le générateur/moteur à courant continu (101) est susceptible d'être entraîné par l'énergie de rotation en surplus de l'hélice (109) pour charger la batterie de stockage (103) en supplément à l'entraînement du générateur alternatif (111). afin de produire la puissance de sortie en courant alternatif souhaitée.

2. Dispositif selon la revendication 1, dans lequel l'unité centrale de contrôle (CCU 102) agit pour contrôler la vitesse de rotation du générateur/moteur à courant continu (101).

3. Dispositif selon la revendication 2, dans lequel l'unité centrale de contrôle (CCU 102) contrôle la vitesse de rotation du générateur/moteur à courant continu (101) de façon à fournir une puissance de rotation suffisante au générateur à courant continu (111).

4. Dispositif selon l'une quelconque des revendications 1 à 3, dans lequel l'unité centrale de contrôle (CCU 102) agit pour contrôler le magnétisme ou l'induction magnétique d'excitation du générateur à courant alternatif (111), afin de contrôler la tension qu'il génère.

5. Dispositif selon l'une quelconque des revendications précédentes, dans lequel l'unité centrale de contrôle (CCU 102) agit pour commander le frein (110).

6. Dispositif selon l'une quelconque des revendications précédentes, dans lequel l'angle de chaque pale d'hélice est réglable.

7. Dispositif selon la revendication 6, dans lequel l'unité centrale de contrôle (CCU 102) agit pour contrôler l'angle des pales de l'hélice.

8. Dispositif selon l'une quelconque des revendications précédente, comprenant en outre un limiteur pour réduire la vitesse de rotation de surplus à partir de l'hélice (109).

9. Dispositif selon la revendication 8, dans lequel l'unité centrale de contrôle (CCU 102) agit pour contrôler le fonctionnement du limiteur.

10. Dispositif selon l'une quelconque des revendications précédentes, susceptible de fonctionner de telle façon que l'électricité obtenue par le branchement sur le secteur puisse être utilisée pour fournir la puissance à un générateur à courant alternatif (111) comme un moteur pour entraîner le générateur/moteur (101) à courant continu afin de charger la batterie (103).

11. Dispositif selon l'une quelconque des revendications précédentes, dans lequel le système de trains d'engrenages planétaires comporte une roue d'engrenages planétaires (104) susceptible de tourner avec le générateur/moteur à courant continu (111) et des trains d'engrenages satellites (106) susceptibles de tourner avec l'hélice (109) autour de l'axe de la roue d'engrenages planétaires (104).

12. Dispositif selon l'une quelconque des revendications précédentes, dans lequel l'hélice (109) est susceptible d'être entraînée par le vent.

13. Dispositif selon l'une quelconque des revendications 1 à 11, dans lequel l'hélice (109) est susceptible d'être entraînée par un écoulement d'eau.
